# EUROPÄISCHE PATENTSCHRIFT

(11) **EP 0 771 259 B1**
(45) Veröffentlichungstag und Bekanntmachung des Hinweises auf die Patenterteilung: **06.08.2003**
(21) Anmeldenummer: 96915029.1
(22) Anmeldetag: 08.05.1996
(51) Int. Cl.: B29B 7/76, B29B 7/90, B01F 5/20, B29C 70/30, B29C 67/24

(54) **VORRICHTUNG ZUR HERSTELLUNG VON MIT VERSTÄRKUNGSFASERN DURCHSETZTEN KUNSTSTOFFTEILEN**
DEVICE FOR MANUFACTURING PLASTIC PARTS WITH INCORPORATED REINFORCEMENT FIBRES
DISPOSITIF DE FABRICATION DE PIECES EN PLASTIQUE A FIBRES DE RENFORCEMENT INCORPOREES

(30) Priorität: 08.05.1995 DE 19516806; 12.10.1995 DE 19538021
(43) Veröffentlichungstag der Anmeldung: 07.05.1997
(73) Patentinhaber: Krauss-Maffei Kunststofftechnik GmbH, 80997 München (DE)
(72) Erfinder: Söchtig, Wolfgang, 82110 Germering (DE); Renkl, Josef, 85229 Markt Indersdorf (DE); Bauer, Adolf, 80140 Olching (DE)
(74) Vertreter: Zollner, Richard
(86) Internationale Anmeldenummer: EP9601925
(87) Internationale Veröffentlichungsnummer: WO96035562

(56) Entgegenhaltungen:
- EP-A- 0 037 523
- EP-A- 0 594 981
- WO-A-93/01444
- DE-A- 2 017 548
- DE-A- 2 242 251
- DE-A- 2 628 854
- GB-A- 1 360 803
- GB-A- 1 418 091
- GB-A- 1 579 543
- US-A- 4 809 909
- PATENT ABSTRACTS OF JAPAN vol. 012, no. 434 (M-764), 16.November 1988 & JP,A,63 170020 (SEKISUI CHEM CO LTD), 13.Juli 1988,
- PATENT ABSTRACTS OF JAPAN vol. 013, no. 133 (M-809), 4.April 1989 & JP,A,63 302024 (SEKISUI CHEM CO LTD;OTHERS: 02), 8.Dezember 1988,
- PLASTICS ENGINEERING, Bd. 52, Nr. 8, August 1996, GREENWICH, CONN US, Seiten 16-21, XP002012579 VICTOR WIGOTSKY: "Thermoplastics, Thermosets"

## Beschreibung

Die Erfindung bezieht sich auf eine Vorrichtung gemäß Oberbegriff des Anspruchs 1.

Bei der Herstellung von Kunststoffteilen nach dem Reaktionsgießverfahren ist es bekannt, das Reaktionsgemisch mit Füllstoffen, wie z.B. Glasfasern oder Kohlestoffasern zu versetzen, um die mechanischen Eigenschaften des Fertigteils zu verbessern. Hierzu werden einer oder beiden chemisch reaktiven Kunststoffkomponenten die entsprechenden Fasern beigemischt. Dabei können jedoch nur sehr kurze Fasern (ca. 0,2mm) eingesetzt werden, da ansonsten die Viskosität der reaktiven Kunststoffkomponente sehr stark ansteigt, so daß bei der Hochdruckinjektion keine ausreichende Vermischung mehr erzielt werden kann. Außerdem kommt es bei langen Fasern bei der Hochdruckverdüsung der Kunststoffkomponenten in die Mischkammer zu Faserbruch.

Aus der DE-OS 28 23 189 ist es bereits bekannt, in die Mischkammer einer Polyurethananlage über einen Zuführkanal Glasfasern zusammen mit einem Teil einer der Materialkomponenten aus chemisch reaktivem Kunststoff einzuleiten. Da diese mit Glasfasern beladene Materialkomponente nur durch einen Pumpvorgang auf den in der Mischkammer herrschenden Druck gebracht werden kann, können nur kurze Fasern verwendet werden, um beim Pumpvorgang und bei der Eindüsung in die Mischkammer Faserbruch zu vermeiden. Durch den über den Zuführkanal zusätzlich in die Mischkammer eingeleiteten Materialstrom wird femer die im exakten stöchiometrischen Verhältnis sicherzustellende Mischung der chemisch reaktiven Kunststoffkomponenten gestört, so daß keine gleichbleibende Qualität des Endproduktes gewährleistet werden kann.

Aus der unveröffentlichten Patentanmeldung P 44 17 596 ist es ferner bekannt, bei einer Vorrichtung der eingangs genannten Art die Füllstoffe über einen gesonderten Kanal in die Beruhigungskammer mittels eines Fluidisierungsgases einzubringen. Der Eintrag der Füllstoffe erfolgt dabei jedoch nur an einer Stelle im Randbereich der Strömung des Reaktionsgemisches wodurch sich eine ungleichförmige Verteilung der Füllstoffe im Fertigteil ergeben kann.

Aus der DE 33 13 042 A1 ist es im weiteren bekannt, Füllstoffe, z.B. Farbstoff, mittels eines mit einer Bohrung versehenen Drosselorgans in das Reaktionsgemisch einzubringen. Der Eintrag erfolgt dabei an der Drosselstelle, wo starke Druckschwankungen zur Zerstörung druckempfindlicher Füllstoffe führen können. Da der Eintrag auch entgegen der Strömung des Reaktionsgemisches erfolgt, ist diese Einrichtung auch nicht zur Einbringung von langfaserigen Füllstoffen geeignet.

Im weiteren ist es aus der DE-OS 29 24 554 bekannt, die Füllstoffe über eine in einem Kolben angeordnete axiale Bohrung in der Mischkammer dem Reaktionsgemisch beizumengen. Der Kolben ist dabei reversierbar in einer zylindrischen Kammer geführt, aus der das Reaktionsgemisch in Intervallen ausgestoßen und in einen Formhohlraum gefördert wird. Die Förderung der Füllstoffe, z.B. von Glasfasern, durch die axiale Bohrung und eine seitliche Zuführleitung ist dabei nicht einfach zu bewerkstelligen. Sie kann nur über eine Druckbeaufschlagung der Füllstoffe erfolgen, wozu es zweckmäßig ist, die Füllstoffe in einen flüssigen oder teigigen Zustand zu versetzen, um diese durch Pumpen in die Kammer einpressen zu können. Mit diesen Zuführeinrichtungen können jedoch nur kurzfaserige Füllstoffe gefördert werden. Da die Glasfasern und eventuell das die Glasfasern transportierende fließfähige Medium direkt in die Mischkammer eingebracht werden, besteht auch die Gefahr, daß die Vermischung der chemisch reaktiven Komponenten gestört wird und sich das erforderliche genaue stöchiometrische Mischungsverhältnis zur Erzielung einer gleichbleibenden Qualität des Endproduktes nicht einstellen kann.

In gleicher Weise besteht nach der GB 1 245 216 der Nachteil, daß durch die unmittelbar in die Mischkammer eingebrachten Zusatzstoffe die Vermischung beeinträchtigt wird und demgemäß Qualitätseinbußen im Endprodukt in Kauf genommen werden müssen.

Femer ist es bei der Herstellung von aus Thermoplast-Kunststoff bestehenden Kunststoffteilen bekannt, die in einer Plastifiziereinheit erzeugte Schmelze aus thermoplastischem Kunststoff mittels einer beweglichen Einspritzeinheit über ein geöffnetes Werkzeug zu führen und dabei einen Strang aus fließfähiger Schmelze abzulegen, wobei in das Werkzeug vor oder nach der Strangablage eine Geflechtmatte aus langen Verstärkungsfasern in das geöffnete Werkzeug eingelegt wird, die anschließend mit der strangförmig verlegten Schmelze zu einem mit langen Verstärkungsfasern durchsetzten Kunststoffteil verpreßt wird. Dieses Herstellungsverfahren ist verhältnismäßig aufwendig, da die Geflechtmatte aus langen Verstärkungsfasem vor dem Einbringen in das Werkzeug auf die Kontur des Formteils zurechtgeschnitten werden muß. Des weiteren kann es notwendig sein, die Geflechtmatte in einem vorgeschalteten Formvorgang vorzuformen, wofür die Geflechtmatte mit fein verteilten Thermoplast-Kunststoffteilchen durchsetzt sein muß, die dafür sorgen, daß die vorgeformte Geflechtmatte, für den nächsten Arbeitsschritt ihre Form behält.

Aus der GB 13 60 803 ist es ebenfalls bekannt, mittels eines ringförmigen Strömungskanals eine schlauchförmige Strömung aus fließfähigem Kunststoff zu erzeugen und in das Zentrum der schlauchförmigen Strömung Verstärkungsfasem einzuschließen, dies erfolgt mittels Förderwalzen, die mit Schneideinrichtungen versehen sind. Die Verstärkungsfasern werden dabei als Endlosstrang von den Förderwalzen erfasst, mit den Schneideinrichtungen geschnitten und als Langfaserabschnitte mit hoher Geschwindigkeit in das Zentrum der schlauchförmigen Strömung gefördert. Diese Vorrichtung ermöglicht zwar eine intensivere Durchmischung des fließfähigen Kunststoffes mit den langen Faserabschnitten es ist jedoch keine taktweise Befüllung von Spritzgießformen möglich, da die Gefahr besteht, dass bei einer Unterbrechung des Gemischstromes das im Strömungskanal verbleibende Restmaterial aushärtet und zu Blockierungen führt.

Aus der DE 20 17 548 A ist der Mischkopf einer Polyuhrethananlage bekannt, bei dem ein Gemisch aus chemisch reaktiven Kunststoffkomponenten in eine Auslaufkammer strömt und dort mittels eines eingesetzten Rohres in einen schlauchartigen Strom umgeformt wird. Dabei wird in das Zentrum des schlauchartigen Stromes über das Rohr Füllmaterial eingegeben.

Der Erfindung liegt daher die Aufgabe zugrunde, eine Vorrichtung zum Herstellen von mit langen Verstärkungsfasern durchsetzten Grundstoffteilen so zu verbessern, dass druckempfindliche und langfaserige Füllstoffe vollkommen zerstörungsfrei und schonend vor dem Verpressen in einem Kunststoffformwerkzeug mit dem fließfähigen Kunststoff lediglich in einem Arbeitsschritt in homogener Verteilung vermengt werden können, wobei die Funktionsfähigkeit der Vorrichtung aufrecht zu erhalten ist.

Diese Aufgabe wird durch die Merkmale des Patentanspruchs 1 gelöst. Die abhängigen Ansprüche beziehen sich auf weitere vorteilhafte Merkmale der Erfindung.

Bei der Verwendung von fließfähigem Kunststoff in Form von schmelzeflüssigem Thermoplastkunststoff bestand bislang ebenfalls nur die Möglichkeit, lange Verstärkungsfasern in Form der vorbeschriebenen Fasermatten in gesonderten Arbeitsschritten in das Kunststoffteil einzubringen.

In einer bevorzugten Ausführungsform der Erfindung wird als fließfähiger Kunststoff ein Gemisch aus chemisch reaktiven Kunststoffkomponenten in eine zylindrische Auslaufkammer geleitet, in der ein Reinigungskolben reversierbar geführt ist und durch dessen Zentrumsbereich ein Faser-Förderkanal verläuft. Infolge eines an der Stimseite des Reinigungskolbens angeordneten rohrförmigen Ansatzes wird in der Auslaufkammer ein ringförmiger Strömungskanal geschaffen, durch den sich eine schlauchartige Gemischströmung bildet, in dessen Zentrumsbereich der Faser-Förderkanal mündet, wodurch die Möglichkeit besteht, lange Verstärkungsfasem in den fließfähigen Kunststoff einzubringen. Dem Faser-Förderkanal sind, vorzugsweise jeweils paarweise an seiner Eintrittsöffnung angeordnete Förderwalzen zugeordnet, die einen Endlos-Faserstrang von einer Spule abziehen und mit hoher Geschwindigkeit durch den Faser-Förderkanal schießen. Diese Förderwalzen sind mit Schneideinrichtungen versehen, wodurch die Verstärkungsfasem in Abschnitte bestimmter Länge unterteilt werden können. Werden mehrere Förderwalzenpaare mit unterschiedlichen Durchmessern zur Erzeugung von Faserabschnitten unterschiedlicher Länge nebeneinander angeordnet und sind diese Förderwalzen in beliebiger Abfolge zu der Eintrittsöffnung des Faser-Förderkanals positionierbar, so können dem Strom aus fließfähigem Kunststoff in zeitlicher Abfolge Verstärkungsfasern in unterschiedlicher Länge beigemengt werden. Dies ist insbesondere von Vorteil, wenn die Vorrichtung zur Erzeugung der beiden Ströme aus fließfähigem Kunststoff und aus langen Verstärkungsfasern über die Oberfläche eines Kunststofformwerkzeugs geführt wird, um ein flächiges, mit langen Verstärkungsfasem durchsetztes Kunststoffteil zu erzeugen. Durch Variierung der Länge der Faserabschnitte durch Zupositionierung der entsprechenden Förderwalzen auf die Eintrittsöffnung des Faser-Förderkanals kann ein Kunststoffteil geschaffen werden, das, je nach Festigkeitsanforderungen und Formbeschaffenheit, Fasem unterschiedlicher Länge enthält. So kann es z.B. vorteilhaft sein, stark geneigte Oberflächenbereiche des Formwerkzeugs mit fließfähigem Kunststoff zu überdecken der besonders lange Verstärkungsfasern enthält. Desgleichen kann durch unterschiedliche Geschwindigkeit der Förderwalzen dafür gesorgt werden, daß das Kunststoffteil in bestimmten Teilbereichen mit Fasern in höherer oder geringerer Dichte durchsetzt wird. Die Verstärkungsfasem werden dabei vollständig von fließfähigem Kunststoff ummantelt.

Der mit der vorbeschriebenen Vorrichtung geschaffene ringförmige Strömungskanal kann anstelle eines fest mit dem Reinigungskolben verbundenen rohrförmigen Ansatzes auch mit Hilfe eines Tauchrohres geschaffen werden, das den Reinigungskolben zentrisch durchsetzt und den Faser-Förderkanal bildet. Damit besteht die Möglichkeit, daß der Reinigungskolben unabhängig vom Tauchrohr bewegt werden kann. Das Tauchrohr kann den Reinigungskolben sowie dessen hydraulische Betätigungselemente durchsetzen und im Gehäuse der Vorrichtung befestigt sein. Damit ergibt sich der Vorteil, daß die Einrichtungen zur Erzeugung langer Verstärkungsfasem und zum Transport dieser Verstärkungsfasem durch den Faser-Förderkanal im Tauchrohr gehäusefest angeordnet werden können.

Anstelle der vorbeschriebenen Vorrichtungen zur Erzeugung einer schlauchartigen Strömung aus fließfähigem Kunststoff kann auch eine Ringdüse verwendet werden, in deren Zentrumsbereich der Faser-Förderkanal oder ein Kanal zur Förderung anderer Füllstoffe mündet.

Ausführungsbeispiele der Erfindung werden nachfolgend anhand der Zeichnung näher erläutert. Es zeigt:
- Fig. 1: in Seitenansicht den Schnitt durch einen Mischkopf zur Erzeugung eines Gemischstromes aus chemisch reaktiven Kunststoffkomponenten mit einer Einrichtung zur Zusammenführung des Gemischstromes mit einem Strom aus langen Verstärkungsfasern, und
- Fig. 2: einen Mischkopf nach Fig. 1 mit einer abgewandelten Einrichtung zur Zusammenführung des Gemischstromes mit einem Strom aus langen Verstärkungsfasern.

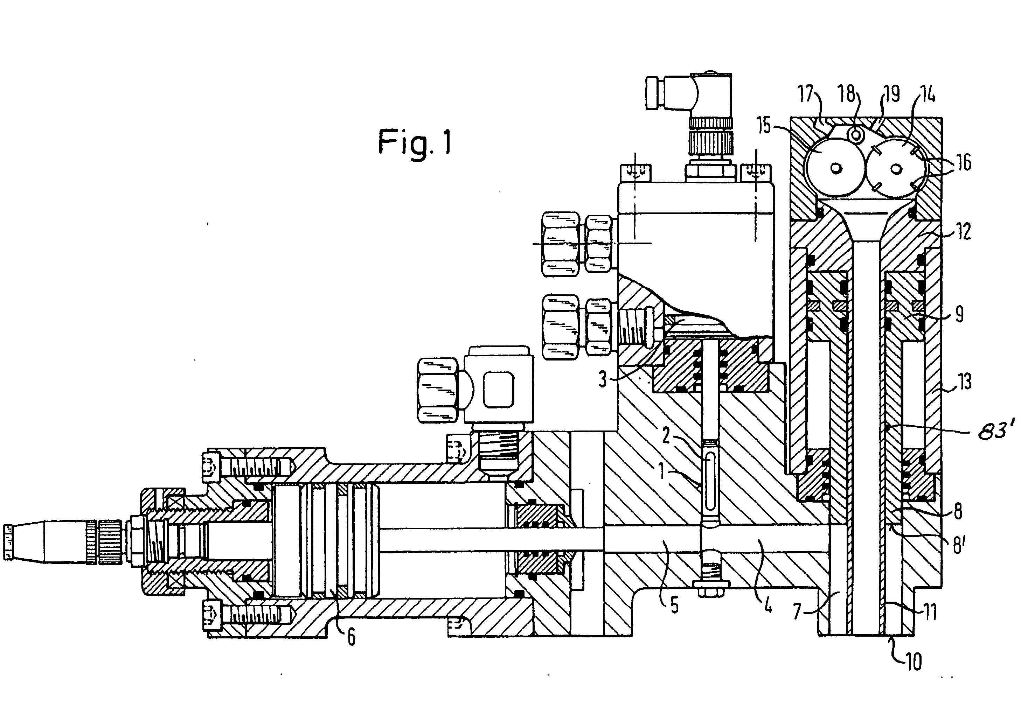

Die Fig. 1 zeigt den Mischkopf einer Polyurethananlage, in dem chemisch reaktive Kunststoffkomponenten, wie Polyol und Isocyanat zu einem Gemisch aus fließfähigem Kunststoff vermengt werden. Gemäß Fig. 1 ist in einer Mischkammer 1 ein Steuerkolben 2 angeordnet, der mittels eines Hydraulikkolbens 3 reversierbar in der Mischkammer 1 geführt ist. In die Mischkammer 1 münden senkrecht zur Zeichnungsebene führende Injektionsöffnungen (nicht dargestellt) für die chemisch reaktiven Kunststoffkomponenten. Mit dem Steuerkolben 2 werden die Injektionsöffnungen zeitgleich aufund zugesteuert, desgleichen erfüllt der Steuerkolben 2 die Funktion, das in der Mischkammer 1 aus den reaktiven Kunststoffkomponenten gebildete Reaktionsgemisch aus der Mischkammer 1 auszutreiben und die Wände der Mischkammer 1 von Reaktionsgemisch zu reinigen.

Im rechten Winkel zur Mischkammer 1 ist eine Beruhigungskammer 4 angeordnet, in der ein erster Reinigungskolben 5 reversierbar geführt ist. Der erste Reinigungskolben 5 ist mittels eines zweiten Hydraulikkolbens 6 betätigbar.

An die Beruhigungskammer 4 schließt sich im rechten Winkel ein Auslaufrohr 7 an, in dem ein zweiter Reinigungskolben 8 reversierbar geführt ist. Der zweite Reinigungskolben 8 ist mittels eines dritten Hydraulikkolbens 9 betätigbar. Das Auslaufrohr 7 mündet mit seiner Austragsöffnung 10 in den Formhohlraum einer Spritzform (nicht dargestellt).

Der zweite Reinigungskolben 8 und der dritte Hydraulikkolben 9 werden von einem Tauchrohr 11 zentrisch durchsetzt, das im Zylinderdeckel 12 des Hydraulikzylinders 13 befestigt ist.

Durch das Tauchrohr 11 sind von außen Füllstoffe bis unmittelbar zur Austragsöffnung 10 in das aus dem Auslaufrohr 7 strömende Reaktionsgemisch einführbar.

Besonders geeignet ist das Tauchrohr 11 zur Einführung von langen Fasern, beispielsweise zum Einführen von Strängen aus Glasfasern oder Kohlestoffasern.

Die Faserstränge werden über Förderwalzen 14 und 15 erfaßt und durch das in der zentrischen Bohrung 83' angeordnete Tauchrohr 11 in das Reaktionsgemisch eingeschossen.

Eine der Förderwalzen 14 kann mit Schneideinrichtungen in Form von vier auf dem Walzenumfang verteilten Messern 16 versehen sein, wodurch der Faserstrang in bestimmte Längenabschnitte unterteilt werden kann. Die Länge der Abschnitte ist beliebig variierbar. Grundsätzlich können über die Förderwalzen 14 und 15 auch bereits vorher in Längenabschnitte unterteilte Faserstränge durch das Tauchrohr 11 in das Reaktionsgemisch eingeschossen werden.

Der Faserstrang wird nach dem Einführen durch die Einführöffnung 17 zunächst von der Förderwalze 15 und der Andruckwalze 18 erfaßt, worauf der Faserstrang zwischen die beiden Förderwalzen 14 und 15 gelangt und von diesen zentrisch durch das Tauchrohr 11 geschossen wird.

Je nach Länge des Tauchrohres 11 können die Langfaserstränge oder sonstige Füllstoffe in beliebigen Bereichen des Auslaufrohres 7 in das Reaktionsgemisch eingeschossen werden. Die Fasern oder die sonstigen Füllstoffe gelangen zentrisch in das durch das Auslaufrohr 7 strömende Reaktionsgemisch und werden somit bei der Überleitung in den Formhohlraum gleichförmig im Gießteil verteilt.

Die Förderung der Faserstränge oder der sonstigen Füllstoffe durch das Tauchrohr 11 kann durch ein Fluidisierungsmittel, wie z.B. Druckgas, unterstützt werden, das durch die Öffnung 19 eingeführt wird. Anstelle oder zusätzlich zu dem Fluidisierungsmittel können auch weitere fluide Mittel in das Reaktionsgemisch eingebracht werden. So können beispielsweise neben Fasersträngen zusätzlich Füllstoffe mit einem Fluidisierungsgas in das Reaktionsgemisch eingetragen werden.

Die Erfindung ist am Beispiel eines Tauchrohres 11 erläutert, das den im Auslaufrohr 7 reversierbar geführten Reinigungskolben 8 durchsetzt. Ein Tauchrohr der beschriebenen Art kann jedoch auch im Steuerkolben 2 und in der Mischkammer 1 eines einfachen Geradeausmischkopfes angeordnet sein, dessen Mischkammer 1 keine Beruhigungskammer 4 nachgeordnet ist.

Das Tauchrohr 11 kann auch bei einem Mischkopf, der lediglich aus einer Mischkammer 1 und einer Beruhigungskammer 4 besteht, im Reinigungskolben und in der Beruhigungskammer angeordnet sein.

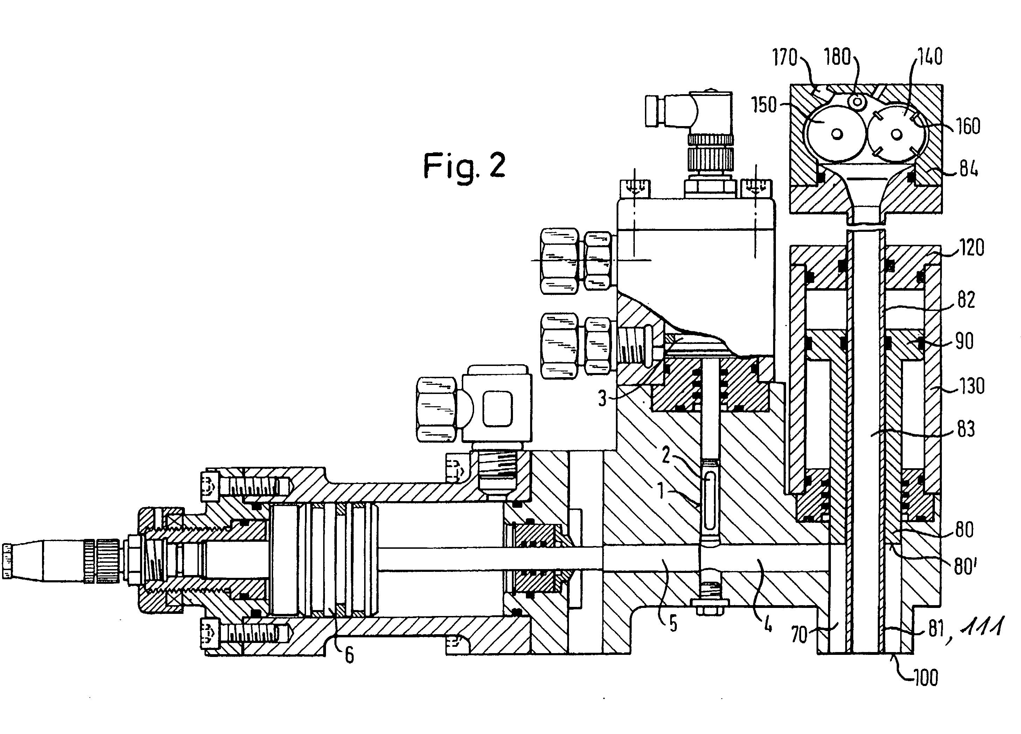

Die Fig. 2 zeigt einen dem Mischkopf nach Fig. 1 entsprechenden Mischkopf, wobei für die übereinstimmenden Funktionselemente die gleichen Bezugszeichen 1 bis 6 verwendet wurden.

An die Beruhigungskammer 4 schließt sich im rechten Winkel ein Auslaufrohr 70 an, in dem ein Reinigungskolben 80 reversierbar geführt ist. Der Reinigungskolben 80 ist mittels eines dritten Hydraulikkolbens 90 betätigbar. Das Auslaufrohr 70 mündet mit seiner Austragsöffnung 100 in den Formhohlraum einer Spritzform (nicht dargestellt).

Der zweite Reinigungskolben 80 weist einen rohrartigen Ansatz 81 und der dritte Hydraulikkolben 90 weist ein rohrförmiges Ansatzstück 82 auf. Sowohl der rohrartige Ansatz 81 als auch das rohrartige Ansatzstück 82 werden von einem im Reinigungskolben 80 fest eingepreßten Rohr gebildet, so daß der Reinigungskolben 80, der rohrartige Ansatz 81 und das rohrartige Ansatzstück 82 ein einheitliches Bauteil bilden. Der rohrförmige Ansatz 81 und das rohrartige Ansatzstück 82 können auch einstückig mit dem Reinigungskolben 80 verbunden sein, d.h. alle Teile können aus einem einstückigen Drehteil bestehen. Durch den Reinigungskolben 80 sowie den rohrförmigen Ansatz 81 und das rohrförmige Ansatzstück 82 verläuft eine zentrische Bohrung 83, die von einem Tauchrohr 111 umschlossen ist.

Der Reinigungskolben 80 und das rohrartige Ansatzstück 82 durchsetzen einen Zylinderdeckel 120.

Durch die zentrische Bohrung 83 sind von außen Füllstoffe in das aus dem Auslaufrohr 70 strömende Reaktionsgemisch einführbar. Das Zusammentreffen der Füllstoffe mit dem Reaktionsgemisch kann je nach Länge des rohrförmigen Ansatzes 81 oder der axialen Positionierung des Reinigungskolbens 80 frei gewählt werden. Für die Erfindung ist wesentlich, daß durch den rohrartigen Ansatz 81 eine schlauchförmige Strömung aus Reaktionsgemisch erzeugt wird, in die die Füllstoffe zentrisch eingetragen werden. Die Füllstoffe werden dabei vom Reaktionsgemisch ummantelt und vermischen sich aufgrund der Tatsache, daß die Füllstoffe und das Reaktionsgemisch in derselben Transportrichtung gefördert werden auf besonders schonende Weise. Das erfindungsgemäße Verfahren und die hierzu angegebenen Vorrichtungen eignen sich daher besonders für die Beimengung von langen Fasern in das Reaktionsgemisch, insbesondere von Strängen aus Glasfasern oder Kohlestoffasern. Es können jedoch auch Naturfasern, wie z.B. Hanffasem verwendet werden.

Die endlos auf einer Faserspule aufgewickelten Fasern (z.B. Glasfaserrovings) werden von Förderwalzen 140 und 150 erfaßt und durch die zentrische Bohrung 83 in das schlauchartige Reaktionsgemisch eingetragen.

Die Förderwalzen 140 und 150 sowie deren Antriebe sind auf einem am rohrartigen Ansatzstück 82 befestigten Gehäuse 84 gelagert und bewegen sich zusammen mit dem Reinigungskolben 80.

Eine der Förderwalzen 140 ist mit Schneideinrichtungen in Form von auf dem Walzenumfang verteilten Messern 160 versehen, wodurch der Faserstrang in bestimmte Längenabschnitte unterteilt werden kann. Die Länge der Abschnitte ist je nach Anzahl der Messer und Walzenumfang beliebig variierbar. Der Faserstrang wird nach dem Einführen durch die Einführöffnung 170 zunächst von der Förderwalze 150 und der Andruckwalze 180 erfaßt, worauf der Faserstrang zwischen die beiden Förderwalzen 140 und 150 gelangt und von dieser zentrisch in die Bohrung 83 geschossen wird.

Grundsätzlich können die Förderwalzen 140 und 150 bzw. das Gehäuse 84 anstelle der Befestigung am rohrförmigen Ansatzstück 82 bzw. am Reinigungskolben 80 auch unabhängig vom Reinigungskolben 80 befestigt sein, z.B. am Zylinderdeckel 120, wobei die Überführung der von den Förderwalzen 140 und 150 beschleunigten Faserstränge in die zentrische Bohrung 83 im rohrartigen Ansatzstück 82 durch Zwischenschaltung eines Teleskoprohres erfolgen kann.

Die Transportgeschwindigkeit, mit der die Faserstränge durch die zentrische Bohrung 83 geschossen werden, ist auf die Strömungsgeschwindigkeit der schlauchartigen Reaktionsgemischströmung nach der Maßgabe abgestimmt, daß bei intensiver und homogener Durchmischung der langen Faserabschnitte mit dem Reaktionsgemisch Faserbruch in jedem Fall ausgeschlossen werden kann. Die Vermischung kann z.B. bei gleichen Transportgeschwindigkeiten der beiden Elemente erfolgen, es können jedoch auch durch geringe Geschwindigkeitsdifferenzen und dadurch an den Kontaktbereichen zwischen Fasern und Reaktionsgemisch hervorgerufene Scherströmungen die Vermischungseffekte gesteigert werden.

Im Betrieb wird das aus der Beruhigungskammer 4 austretende Reaktionsgemisch in der Auslaufkammer 70 umgelenkt und durch den Ringkanal, der durch das Auslaufrohr 70 und den rohrförmigen Ansatz 81 gebildet wird, zu einem schlauchartigen Fließstrom geformt, in dessen zentrische Öffnung die Füllstoffe eingetragen werden. Die Füllstoffe werden dadurch nicht unmittelbar mit dem Reaktionsgemisch in Kontakt gebracht sondem erst im Verlauf einer mit dem Reaktionsgemisch gleichgerichteten Transportphase.

Anstelle der in den Ausführungsbeispielen nach den Fig. 1 und 2 dargestellten Mischköpfe (Bezugszeichen 1 bis 6), die fließfähigen Kunststoff in Form eines Reaktionsgemisches liefern, können die Auslaufrohre 7 bzw. 70 auch an eine Plastifiziereinheit angeschlossen werden, wie sie bei einer Kunststoffspritzgießmaschine zur Herstellung von Kunststoffteilen aus Thermoplast-Kunststoff verwendbar ist. Auch ist ein Anschluß an einen Extruder möglich. Beide Vorrichtungen liefern fließfähigen Kunststoff in Form einer Thermoplast-Kunststoffschmelze.

## Patentansprüche

1. Vorrichtung zum Herstellen von mit Verstärkungsfasern durchsetzten Kunststoffteilen mit einer Mischkammer zur Erzeugung eines Gemisches aus chemisch reaktiven Kunststoffkomponenten, mit einer der Mischkammer nachgeordneten zylindrischen Auslaufkammer (7, 70) in der sich ein rohrförmiger Ansatz (11,81) befindet, dessen Außendurchmesser geringer ist als der Innendurchmesser der Auslaufkammer (7;70) und der mit der Innenwandung der Auslaufkammer (7,70) einen ringförmigen Strömungskanal für das Gemisch aus den chemisch reaktiven Kunststoffkomponenten einschließt, wobei im rohrförmigen Ansatz (11,81) ein in die Auslaufkammer (7,70) mündender Faser-Förderkanal angeordnet ist, **dadurch gekennzeichnet, dass** der rohrförmige Ansatz (11,81) an der Stirnseite (8,80') eines reversierbar in der Auslaufkammer (7,70) geführten Reinigungskolbens (8,80) angeordnet ist und dass dem Faser-Förderkanal Förderwalzen (140, 150) mit einer Schneideinrichtung (160) zur Zuführung von Fasern zugeordnet sind.

2. Vorrichtung nach Anspruch 1, **dadurch gekennzeichnet, dass** der Reinigungskolben (8,80) von einer zentrischen Bohrung (83,83') durchsetzt ist.

3. Vorrichtung nach Anspruch 2, **dadurch gekennzeichnet, dass** im Reinigungskolben (8,80) eine zentrische Bohrung (83, 83') angeordnet ist, die von einem Tauchrohr (11,111) durchsetzt ist, das den Faser-Förderkanal enthält, wobei der über die Stirnseite (8',80') des Reinigungskolbens (8,80) hinausragende Teil des Tauchrohres (11,111) den rohrförmigen Ansatz (11,81) darstellt, der mit den Innenwandung der Auslaufkammer (7,70) den ringförmigen Strömungskanal bildet.

4. Vorrichtung nach einem der Ansprüche 2 und 3, **dadurch gekennzeichnet, dass** die zentrische Bohrung (83,83') durch einen hydraulischen Betätigungskolben (9,90) des Reinigungskolbens (8,80) und durch einen Zylinderdeckel (12,120) eines Betätigungszylinders (13,130) verläuft, wobei anschließend Förderwalzen (14,15,140,150) mit Schneideinrichtungen (16,160) angeordnet sind.

5. Vorrichtung nach Anspruch 4, **dadurch gekennzeichnet, dass** das Tauchrohr (11) den Reinigungskolben (8) und den Betätigungskolben (9) durchsetzt und im Zylinderdeckel (12) der Hydraulikeinheit befestigt ist.

6. Vorrichtung nach Anspruch 4, **dadurch gekennzeichnet, dass** das Tauchrohr (111) den Reinigungskolben (80), den Betätigungskolben (90) und den Zylinderdeckel (120) durchsetzt, wobei an dem aus dem Zylinderdeckel (120) herausragenden rohrförmigen Ansatzstück (82) des Tauchrohres (111) die Förderwalzen (140,150) mit der Schneideinrichtung (160) angeordnet sind.

7. Vorrichtung nach Anspruch 6, **dadurch gekennzeichnet, dass** die Eintauchtiefe des Tauchrohres (111) bezüglich der Auslaufkammer (70) veränderbar ist

8. Vorrichtung nach einem der Ansprüche 1 bis 7, **dadurch gekennzeichnet, dass** jeweils zwei oder mehrere gegeneinander laufende Förderwalzenpaare (14,15;140, 150) nebeneinander angeordnet sind, die jeweils Schneideinrichtungen (16, 160) zum Schneiden von Verstärkungsfasern unterschiedlicher Länge aufweisen, wobei eine Verschiebevorrichtung vorgesehen ist, mit der in beliebiger Abfolge jedes der Förderwalzenpaare mit der zugehörigen Schneideinrichtung zu der Eintrittsöffnung des Faser-Förderkanals (83, 83') positionierbar ist.

9. Vorrichtung nach einem der Ansprüche 1 bis 7, **dadurch gekennzeichnet, dass** der Faser-Förderkanal mit einem Fluidisierungsgas beaufschlagbar ist

10. Vorrichtung nach einem der Ansprüche 1 bis 8, **dadurch gekennzeichnet, dass** der fließfähige Kunststoff aus einem Gemisch aus chemisch reaktiven Kunststoffkomponenten besteht, die in einer Mischkammer (1) gebildet werden, in der ein Steuerkolben (2) reversierbar angeordnet ist, mit dem die über Injektionsbohrungen erfolgende Zufuhr der chemisch reaktiven Kunststoffkomponenten steuerbar ist

11. Vorrichtung nach Anspruch 9, **dadurch gekennzeichnet, dass** sich an die Mischkammer (1) im rechten Winkel eine Beruhigungskammer (4) anschließt, in der ein erster Reinigungskolben (5) reversierbar geführt ist

12. Vorrichtung nach Anspruch 10, **dadurch gekennzeichnet, dass** der Beruhigungskammer (4) die Auslaufkammer (7, 70) nachgeordnet ist

13. Vorrichtung nach Anspruch 9, **dadurch gekennzeichnet, dass** der Mischkammer (4) die Auslaufkammer (7, 70) unmittelbar nachgeordnet ist

14. Vorrichtung nach einem der Ansprüche 1 bis 13, **dadurch gekennzeichnet, dass** die Auslaufkammer (7, 70) mit dem Reinigungskolben (8, 80), die Vorrichtung zur Erzeugung des fließfähigen Kunststoffes und die Förderwalzen (14, 15; 140, 150) mit der Schneideinrichtung (16, 160) eine zusammenhängende Baueinheit bilden.

15. Vorrichtung nach Anspruch 13, **dadurch gekennzeichnet, dass** die Baueinheit mittels eines Roboterarmes über die Formoberfläche eines geöffneten Formwerkzeugs führbar ist

## Claims

1. Device for producing plastic parts interspersed with reinforcing fibres, comprising a mixing chamber for producing a mixture of chemically reactive plastic components, comprising a cylindrical outlet chamber (7, 10) arranged downstream of the mixing chamber and in which a tubular projection (11, 81) is located, of which the external diameter is smaller than the internal diameter of the outlet chamber (7, 70) and which encloses with the inner wall of the outlet chamber (7, 70) an annular flow channel for the mixture of chemically reactive plastic components, a fibre-conveying channel opening into the outlet chamber (7, 70) being arranged in the tubular projection (11, 81), **characterised in that** the tubular projection (11, 81) is arranged on the end face (8, 80') of a cleaning piston (8, 80) reversibly guided in the outlet chamber (7, 70), and **in that** conveying rollers (140, 150) with a cutting device (160) are associated with the fibre-conveying channel for supplying fibres.

2. Device according to claim 1, **characterised in that** the cleaning piston (8, 80) is penetrated by a central aperture (83, 83').

3. Device according to claim 2, **characterised in that** a central aperture (83, 83') is arranged in the cleaning piston (8, 80) and is penetrated by a immersion tube (11, 111) containing the fibre-conveying channel, the portion of the immersion tube (11, 111) projecting beyond the end face (8', 80) of the cleaning piston (8, 80) providing the tubular projection (11, 81) which forms the annular flow channel with the inner wall of the outlet chamber (7, 70).

4. Device according to either of claims 2 or 3, **characterised in that** the central aperture (83, 83') extends through an hydraulic actuating piston (9, 90) of the cleaning piston (8, 80) and through a cylinder cover (12, 120) of an actuating cylinder (13, 130), conveying rollers (14, 15, 140, 150) with cutting devices (16, 160) subsequently being arranged.

5. Device according to claim 4, **characterised in that** the immersion tube (11) penetrates the cleaning piston (8) and the actuating piston (9) and is fastened in the cylinder cover (12) of the hydraulic unit.

6. Device according to claim 4, **characterised in that** the immersion tube (111) penetrates the cleaning piston (80), the actuating piston (90) and the cylinder cover (120), the conveying rollers (140, 150) with the cutting device (160) being arranged on the tubular projecting piece (82) of the immersion tube (111) projecting from the cylinder cover (120).

7. Device according to claim 6, **characterised in that** the immersion depth of the immersion tube (111) is changeable with respect to the outlet chamber (70).

8. Device according to any of claims 1 to 7, **characterised in that** two or more pairs of conveying rollers (14, 15; 140, 150) rolling toward each other in each case are arranged side by side and each have cutting devices (16, 160) for cutting reinforcing fibres of different lengths, a displacement device being provided with which any of the pairs of conveying rollers with the associated cutting device can be positioned, in any sequence, with respect to the entry opening of the fibre conveying channel (83, 83').

9. Device according to any of claims 1 to 7, **characterised in that** the fibre conveying channel can be loaded by a fluidising gas.

10. Device according to any of claims 1 to 8, **characterised in that** the flowable plastics material consists of a mixture of chemically reactive plastic components which are formed in a mixing chamber (1) in which a control piston (2) is reversibly arranged and with which the supply of chemically reactive plastic components, occurring via injection apertures, can be controlled.

11. Device according to claim 9, **characterised in that** a settling chamber (4), in which a first cleaning piston (5) is reversibly guided, adjoins the mixing chamber (1) at a right angle.

12. Device according to claim 10, **characterised in that** the outlet chamber (7, 70) is arranged downstream of the settling chamber (4).

13. Device according to claim 9, **characterised in that** the outlet chamber (7, 70) is arranged immediately downstream of the mixing chamber (4).

14. Device according to any of claims 1 to 13, **characterised in that** the outlet chamber (7, 70) forms, with the cleaning piston (8, 80), the device for producing flowable plastics material and the conveying rollers (14, 15; 140, 150) form a cohesive unit with the cutting device (16, 160).

15. Device according to claim 13, **characterised in that** the unit can be guided by means of a robotic arm over the mould surface of an open mould.

## Revendications

1. Dispositif pour la fabrication de pièces en matière plastique chargées avec des fibres renforçantes comportant une chambre de mélange pour l'obtention d'un mélange de composés plastiques réactifs chimiquement, et une chambre de sortie cylindrique (7, 70) située en aval de la chambre de mélange, dans laquelle se trouve une saillie tubulaire (11, 81) dont le diamètre extérieur est inférieur au diamètre intérieur de la chambre de sortie (7, 70) et formant avec la paroi intérieure de la chambre de sortie (7, 70) un conduit d'écoulement annulaire pour le mélange de composés plastiques réactifs chimiquement, moyennant quoi un conduit d'amenée des fibres débouchant dans la chambre de sortie (7, 70) est disposé dans la saillie tubulaire (11, 81), **caractérisé en ce que** la saillie tubulaire (11, 81) se situe à l'avant (8, 80') d'un piston de nettoyage (8, 80) réversible guidé dans la chambre de sortie (7, 70) et que le conduit d'amenée des fibres est associé à des rouleaux d'alimentation (140, 150) avec dispositif coupeur (160) pour l'alimentation en fibres.

2. Dispositif selon la revendication 1, **caractérisé en ce que** le piston de nettoyage (8, 80) est traversé par un alésage central (83, 83').

3. Dispositif selon la revendication 2, **caractérisé en ce qu'**un alésage central (83, 83') se situe dans le piston de nettoyage (8, 80) et est traversé par un tube plongeur (11, 111) contenant le conduit d'amenée des fibres, moyennant quoi la partie du tube plongeur (11, 111) dépassant du front (8', 80') du piston de nettoyage (8, 80) représente la saillie tubulaire (11, 81) qui forme le conduit d'écoulement annulaire avec la paroi intérieure de la chambre de sortie (7, 70).

4. Dispositif selon l'une des revendications 2 et 3, **caractérisé en ce que** l'alésage central (83, 83') traverse un piston de commande hydraulique (9, 90) du piston de nettoyage (8, 80) et un couvercle de cylindre (12, 120) d'un cylindre de commande (13, 130), moyennant quoi des rouleaux d'alimentation (14, 15, 140, 150) avec dispositif coupeur (16, 160) sont disposés à l'extrémité.

5. Dispositif selon la revendication 4, **caractérisé en ce que** le tube plongeur (11) traverse le piston de nettoyage (8) et le piston de commande (9) et est fixé dans le couvercle de cylindre (12) de l'unité hydraulique.

6. Dispositif selon la revendication 4, **caractérisé en ce que** le tube plongeur (111) traverse le piston de nettoyage (80), le piston de commande (90) et le couvercle de cylindre (120), moyennant quoi les rouleaux d'alimentation (140, 150) à dispositif coupeur (160) sont situés sur la partie tubulaire en saillie (82) du tube plongeur (111) qui dépasse du couvercle de cylindre (120).

7. Dispositif selon la revendication 6, **caractérisé en ce que** la profondeur du tube plongeur (111) par rapport à la chambre de sortie (70) est modifiable.

8. Dispositif selon l'une des revendications 1 à 7, **caractérisé en ce que** deux paires ou plus de rouleaux d'alimentation se mouvant l'une (les unes) contre l'autre (les autres) (14, 15 ; 140, 150) sont situées respectivement les unes à côté des autres, chacune présentant un dispositif coupeur (16, 160) de longueur différente pour couper les fibres renforçantes, moyennant quoi un dispositif de déplacement est prévu, permettant de positionner chaque paire de rouleaux d'alimentation avec son dispositif coupeur dans un ordre quelconque à l'orifice d'entrée du conduit d'amenée des fibres (83, 83').

9. Dispositif selon l'une des revendications 1 à 7, **caractérisé en ce que** le conduit d'amenée des fibres peut être alimenté avec un gaz fluidifiant.

10. Dispositif selon l'une des revendications 1 à 8, **caractérisé en ce que** le plastique coulant est constitué d'un mélange de composés plastiques chimiquement réactifs formés dans une chambre de mélange (1) dans laquelle un piston pilote (2) réversible permet de contrôler l'arrivée des composés plastiques chimiquement réactifs par les trous d'injection.

11. Dispositif selon la revendication 9, **caractérisé en ce que** la chambre de mélange (1) jouxte à angle droit une chambre de stabilisation (4) dans laquelle un premier piston de nettoyage (5) est guidé de façon réversible.

12. Dispositif selon la revendication 10, **caractérisé en ce que** la chambre de stabilisation (4) est située après la chambre de sortie (7, 70).

13. Dispositif selon la revendication 9, **caractérisé en ce que** la chambre de mélange (4) est située immédiatement après la chambre de sortie (7, 70).

14. Dispositif selon l'une des revendications 1 à 13, **caractérisé en ce que** la chambre de sortie (7, 70) constitue, avec le piston de nettoyage (8, 80), le dispositif servant à l'obtention du plastique coulant et les rouleaux d'alimentation (14, 15 ; 140, 150) à dispositif coupeur (16, 160), une unité modulaire cohérente.

15. Dispositif selon la revendication 13, **caractérisé en ce que** l'unité modulaire peut être guidée, au moyen d'un bras de robot, au-dessus de la surface du moule d'un outil de formage ouvert.
